# EUROPÄISCHE PATENTSCHRIFT

(11) **EP 3 136 520 B1**
(45) Veröffentlichungstag und Bekanntmachung des Hinweises auf die Patenterteilung: **25.03.2020**
(21) Anmeldenummer: 16184604.3
(22) Anmeldetag: 17.08.2016
(51) Int. Cl.: H01R 31/06, H01R 4/30, H01R 4/56, H01R 101/00, H01R 13/66, H01R 13/53, H02B 13/035

(54) **KONUSADAPTER ZUM ZWISCHENSCHALTEN ZWISCHEN EINEM ANSCHLUSSKONUS UND EINEM ANSCHLUSSMITTEL SOWIE EIN ENTSPRECHENDES VERFAHREN, EIN SYSTEM UND EINE ELEKTRISCHE ANLAGE**
CONE ADAPTER FOR INTERCONNECTING BETWEEN A CONNECTION CONE AND CONNECTING MEANS AND CORRESPONDING METHOD, A SYSTEM AND AN ELECTRICAL INSTALLATION
ADAPTATEUR DE CONE DESTINE A L'INTERCALAGE ENTRE UN RACCORD CONIQUE ET UN MOYEN DE RACCORDEMENT ET PROCEDE ASSOCIE, SYSTEME ET INSTALLATION ELECTRIQUE

(30) Priorität: 27.08.2015 DE 102015216451; 10.02.2016 DE 102016202019
(43) Veröffentlichungstag der Anmeldung: 01.03.2017
(73) Patentinhaber: Power Plus Communications AG, 68167 Mannheim (DE)
(72) Erfinder: Veselcic, Marko, 67122 Altrip (DE)
(74) Vertreter: Patent- und Rechtsanwälte Ullrich & Naumann

(56) Entgegenhaltungen:
- EP-A1- 1 521 381
- EP-A2- 1 187 272
- DE-A1- 3 611 462
- DE-U1-202014 100 207
- US-A1- 2007 141 882

## Beschreibung

Die Erfindung betrifft einen Konusadapter zum Zwischenschalten zwischen einem Anschlusskonus einer elektrischen Anlage, insbesondere einer Mittelspannungsanlage, und einem Anschlussmittel, das zum Aufstecken auf den Anschlusskonus ausgebildet ist, wobei der Konusadapter einen Eingangskonus und einen Ausgangskonus aufweist, wobei der Eingangskonus und der Ausgangskonus elektrisch leitend miteinander verbunden sind, wobei der Eingangskonus zum Aufstecken auf den Anschlusskonus ausgebildet ist und wobei der Ausgangskonus derart ausgebildet ist, dass das Anschlussmittel auf den Ausgangskonus aufsteckbar ist. Die Erfindung betrifft ferner ein Verfahren zum Zwischenschalten eines Konusadapters zwischen einen Anschlusskonus einer elektrischen Anlage, insbesondere einer Mittelspannungsanlage, und einem Anschlussmittel, wobei das Konusadapter einen Eingangskonus und einen Ausgangskonus aufweist. Außerdem betrifft die Erfindung ein System mit einem entsprechenden Konusadapter sowie eine elektrische Anlage mit mindestens einem dieser Systems.

Insbesondere bei elektrischen Anlagen im Mittelspannungsbereich, d.h. bei Wechselspannungen mit Effektivwerten zwischen 1 kV und einschließlich 52 kV, ist es bei Innenraumanwendungen üblich, Anschlusskabel über Anschlusskonusse mit der elektrischen Anlage zu verbinden. Dabei werden die recht starren Anschlusskabel üblicherweise über einen Kabelboden oder einen Kabelkeller zu der elektrischen Anlage und über eine Öffnung von unten in den Anschlussraum der elektrischen Anlage geführt. Am Ende der Anschlusskabel ist üblicherweise jeweils ein L- oder T-förmiger Kabelendverschluss angebracht, der in einem oder zwei Anschlusskonus/- konen endet. Derartige Anschlusskonen sind beispielsweise in der DIN EN 50180 bzw. DIN EN 50181 genormt (steckbare Durchführung) und sind insbesondere bei SF6-Anlagen (Anlagen mit Schwefelhexafluorid als Schutzgas) gebräuchlich. Bei einem T-förmigen Kabelendverschluss kann der eine Anschlusskonus mit der elektrischen Anlage, der andere Anschlusskonus mit einem weiteren Anschlusskabel verbunden werden.

Da elektrische Anlagen im Mittelspannungsbereich nach deren Aufbau meist nicht mehr wesentlich erweitert werden, sind bestehende Anlagen vielfach mit den günstigeren L-förmigen Kabelendverschlüssen ausgestattet. Für den Betrieb der Anlagen ist dies vollkommen ausreichend. Problematisch sind derartige Anlagen allerdings, wenn beispielsweise kapazitive Koppler nach IEC 60358 bzw. IEC 61334-3-22 nachgerüstet werden sollen. Diese werden bei SF6-Anlagen meist über einen genormten Anschlusskonus, bei luftisolierten Anlagen meist über einfache Schraubverbindungen angeschlossen. Ein Beispiel eines Kopplers für einen T-förmigen Kabelendverschluss ist in der EP 1 521 381 A1 offenbart.

Wenn ein L-förmiger Kabelendverschluss vorliegt, muss für die Installation eines Kopplers über einen Anschlusskonus der vorhandene Kabelendverschluss gegen einen T-förmigen Kabelendverschluss ersetzt werden. Da bei Kabelendverschlüssen zur Vermeidung von Feldspitzen und Teilentladungen üblicherweise eine Feldsteuerung notwendig ist, gestaltet sich ein Austausch des Kabelendverschlusses meist schwierig. Meist besteht keine Möglichkeit das vorhandene, relativ starre Anschlusskabel nachzuziehen, um einen neuen Endverschluss montieren zu können. Daher muss das bestehende Kabel erst freigelegt (beispielsweise ausgebaggert) und dann eine Verlängerung angemufft werden, was zu einem hohen Installationsaufwand führt. Dadurch ist es vielfach nicht rentabel, in bestehende Anlagen ohne T-Endverschluss kapazitive Koppler nachzurüsten.

Zwar ist an einem L-förmigen Kabelendverschluss üblicherweise eine Fixierschraube vorhanden, mit der ein Kabelendverschluss mit einem Anschlusskonus einer elektrischen Anlage verschraubt werden kann. Da die Fixierschraube von der dem Anschlusskonus abgewandten Seite des Kabelendverschlusses zugänglich ist, könnte prinzipiell die Fixierschraube zum direkten Anschluss eines kapazitiven Kopplers genutzt werden. Allerdings besteht hierbei das Problem, dass zwar der Anschlusskonus selbst genormt ist, der Schraubbereich aber von den Herstellern relativ frei gestaltet werden kann. Dadurch gibt es herstellerspezifisch erhebliche Abweichungen, wodurch es kaum möglich ist, eine derartige Anschlussmöglichkeit wirtschaftlich sinnvoll zu nutzen.

Ähnliche Probleme bestehen, wenn ein weiteres Anschlusskabel angeschlossen werden soll. Mit einem L-förmigen Kabelendverschluss ist auch hier nur mit großem Aufwand ein Abzweig installierbar.

Auch wenn eine elektrische Mittelspannungsanlage einen bevorzugten Anwendungsbereich darstellt, so ist die hier beschriebene Lehre nicht zwangsläufig auf die Mittelspannungsebene beschränkt.

Aus der DE 36 11 462 A1 ist eine Verbindungsgarnitur bekannt, die in einer Ausgestaltung einen Zwischenstecker zum Zwischenkoppeln zwischen einen Geräteanschluss und ein Anschlusskabel ermöglicht. Problematisch ist, dass für das Zwischenschalten des Zwischensteckers ein ausreichend flexibles und/oder ausreichend verschiebbares Anschlusskabel erforderlich ist.

Entsprechendes gilt für den Koppler der DE 20 2014 100 207 U1 und den Verbinder der US 2007/0141882 A1.

Der vorliegenden Erfindung liegt die Aufgabe zugrunde, eine Möglichkeit anzugeben, mit der in einer elektrischen Anlage, insbesondere in einer Bestandsanlage, ein Abzweig zum Anschluss eines Kabels, eines Geräts und/oder eines Kopplers bei gleichzeitig möglichst geringem Installationsaufwand bereitgestellt werden kann.

Die voranstehende Aufgabe wird durch einen Konusadapter gemäß Anspruch 1 gelöst. Danach ist der Konusadapter dadurch gekennzeichnet, dass der Konusadapter zusätzlich einen Abzweig aufweist, wobei der Eingangskonus, der Ausgangskonus und der Abzweig mittels eines Adapterkerns elektrisch leitend miteinander verbunden sind, dass sowohl bei dem Eingangskonus als auch bei dem Ausgangskonus jeweils eine Achse definiert ist und dass die Achse des Eingangskonus und die Achse des Ausgangskonus einen Winkel α einschließen, wobei der Winkel α zwischen 10° und 35° beträgt.

Das Verfahren nach Anspruch 11, das die voranstehende Aufgabe in verfahrensmäßiger Hinsicht löst, gibt an, wie ein Konusadapter zwischen einen Anschlusskonus einer elektrischen Anlage und einem Anschlussmittel geschaltet werden kann, wobei der Konusadapter einen Eingangskonus und einen Ausgangskonus aufweist. Das erfindungsgemäße Verfahren umfasst die Schritte:
Abziehen des Anschlussmittels von dem Anschlusskonus,
Zurückbiegen eines mit dem Anschlussmittel verbundenen Kabels,
Aufstecken des Eingangskonus des Konusadapters auf den Anschlusskonus und
Aufstecken des Anschlussmittels auf den Ausgangskonus des Konusadapters,
womit der Konusadapter ohne Nachziehen des Kabels (2, 2', 2") in die elektrische Anlage installierbar ist.

Auch das System nach Anspruch 13 löst die voranstehende Aufgabe. Danach besteht das System aus einem Anschlusskonus, einem Konusadapter nach einem der Ansprüche 1 bis 10 und einem Anschlussmittel, das mit einem Kabel verbunden und zum Aufstecken auf den Anschlusskonus ausgebildet ist, wobei der Konusadapter einen Eingangskonus, einen Ausgangskonus und einen Abzweig aufweist, die untereinander elektrisch leitend verbunden sind, wobei der Eingangskonus auf den Anschlusskonus aufgesteckt ist, wobei das Anschlussmittel auf den Ausgangskonus aufgesteckt ist, wobei sowohl bei dem Eingangskonus als auch bei dem Ausgangs-Ausgangskonus jeweils eine Achse definiert ist und wobei die Achse des Eingangskonus und die Achse des Ausgangskonus einen Winkel α einschließen, wobei der Winkel α zwischen 10° und 35° beträgt.

Die elektrische Anlage nach Anspruch 16, die ebenfalls die voranstehende Aufgabe löst, umfasst ein System nach einem der Ansprüche 13 bis 15, wobei der Anschlusskonus des mindestens einen Systems mit einer elektrischen Funktionseinheit der elektrischen Anlage verbunden ist.

Erfindungsgemäß ist zunächst erkannt worden, dass auch in bestehenden elektrischen Anlagen mit relativ geringem Aufwand ein Abzweig geschaffen werden kann. Vielfach ist nämlich im Anschlussbereich einer elektrischen Anlage in axialer Richtung des Anschlusskonus noch Platz verfügbar oder kann zumindest relativ einfach geschaffen werden (beispielsweise durch Einbau einer anderen Türe). Damit dieser Platz nutzbar ist, wird erfindungsgemäß ein Konusadapter bereitstellt, der zwischen Anschlusskonus und Anschlussmittel eines Anschlusskabels schaltbar ist. Es ist nämlich erkannt worden, dass die Anschlusskabel zwar recht starr, aber dennoch ausreichend biegbar sind, dass ein Konusadapter zwischen Anschlusskonus und Anschlussmittel installierbar ist.

Der erfindungsgemäße Konusadapter weist einen Eingangskonus und einen Ausgangskonus auf, wobei Eingangskonus und Ausgangskonus elektrisch miteinander verbunden sind. Dabei ist der Eingangskonus auf den Anschlusskonus der elektrischen Anlage abgestimmt und der Ausgangskonus auf das Anschlussmittel, das zum Aufstecken auf den Anschlusskonus ausgebildet ist und ohne Konusadapter auf den Anschlusskonus gesteckt werden würde. Gemäß einer bevorzugten Ausgestaltung des Konusadapters sind Eingangskonus und Ausgangskonus derart aufeinander abgestimmt, dass der Eingangskonus eines ersten Konusadapters auf den Ausgangskonus eines zweiten gleichartigen Konusadapter steckbar wäre oder umgekehrt.

Eine bei dem Eingangskonus definierte Achse und eine bei dem Ausgangskonus definierte Achse sind nicht parallel zueinander angeordnet, sondern schließen einen Winkel α ein, der zwischen 10° und 35°, bevorzugter Weise 15° bis 25° beträgt und vorzugsweise an eine zu erwartende Einbausituation des Konusadapters angepasst ist. Damit ist es möglich, den Konusadapter ohne Nachziehen des Anschlusskabels in die elektrische Anlage zu installieren.

Die bei dem Ausgangs- bzw. Eingangskonus definierte Achse ist dabei vorzugsweise durch eine Rotationssymmetrieachse gebildet. Da ein Anschlusskonus sehr häufig die Form eines Kegelstumpfes, meist mit sehr steilen Flanken, aufweist, ist eine Rotationssymmetrieachse einfach erkennbar. Auch wenn ein derartiger Anschlusskonus beispielsweise eine Nase aufweisen würde, könnte eine Rotationssymmetrieachse definiert werden, nämlich die Achse, zu der weite Teile des Konus rotationssymmetrisch sind. Sofern bei einer anderen Ausgestaltung des Konus keine Rotationssymmetrie vorliegt, kann die in dem Ausgangs- bzw. Eingangskonus definierte Achse beispielsweise durch eine Einsteckrichtung definiert werden, d.h. die Richtung, entlang der das Anschlussmittel in den Ausgangskonus bzw. der Eingangskonus in den Anschlusskonus gesteckt wird. Eine derartige Einsteckrichtung ist auch bei Verbindungen definierbar, bei denen ein Einstecken mit einem gewissen Spiel möglich ist. Einem Fachmann wird bei den verschiedensten Verbindungen unmittelbar einleuchten, wie eine Achse in dem zuvor beschriebenen Sinne definiert werden kann.

Mit dem Eingangskonus und den Ausgangskonus ist ein Abzweig elektrisch verbunden, mit dem anzuschließende Gerätschaften verbunden werden können, beispielsweise ein Koppler oder über einen weiteren Konus ein Verbraucher oder ein Messgerät. Auf diese Weise kann mit dem erfindungsgemäßen Konusadapter flexibel ein gewünschter Abzweig hergestellt werden, beispielsweise in Form eines weiteren Anschlusskonus oder für einen kapazitiven Koppler. Damit wird der Installationsaufwand auf ein Minimum reduziert und es kann durch verschieden ausgestaltete Konusadapter ein sehr weites Spektrum an Erweiterungsmöglichkeiten geschaffen werden.

Es sei darauf hingewiesen, dass bei dem Begriff "Aufstecken", beispielsweise im Zusammenhang mit dem Eingangskonus, nicht zwangsläufig gemeint ist, dass der Anschlusskonus ein Innenkonus und der Eingangskonus ein Außenkonus ist, der auf den Anschlusskonus gesteckt wird. Vielmehr kann auch der Anschlusskonus einen Außenkonus und der Eingangskonus einen Innenkonus umfassen. Entsprechendes gilt für den Ausgangskonus und das Anschlussmittel.

Unter "Konus" wird vorzugsweise ein zylindrischer Körper oder ein Kegelstumpf verstanden, wobei der Kegelstumpf meist derart steile Kegelwände aufweisen wird, dass dessen Wände um maximal 20° von den Wänden eines Zylinders abweichen. Ein Innenkonus ist zu der Zylinderachse bzw. der Kegelstumpfachse hin "gefüllt", ein Außenkonus ist zu der Zylinderachse bzw. der Kegelstumpfachse hin offen, wodurch ein Innenkonus in einen Außenkonus steckbar ist und den Außenkonus vorzugsweise im Wesentlichen ausfüllt. Vorzugsweise ist ein derartiger Konus nach DIN EN 50180 bzw. DIN EN 50181 genormt. Auch wenn dies eine bevorzugte Ausgestaltung ist, so muss die Grundfläche des Konus nicht zwangsweise rund sein. Es wäre auch denkbar, dass an einem Konus eine Nase vorgesehen ist, die bei Verbinden zweier Konusse in eine korrespondierende Vertiefung bei den anderen Konus eingreift. Andererseits wäre denkbar, dass die Grundfläche ein Vieleck, beispielsweise ein Sechseck oder ein Achteck, oder eine Ellipse umfasst.

Bezüglich der elektrischen Leitfähigkeit des Eingangskonus bzw. Ausgangskonus sei angemerkt, dass durchaus ein großer Teil der Oberfläche des Eingangs- bzw. Ausgangskonus durch einen isolierenden Werkstoff gebildet sein kann. Dennoch wird zumindest ein Teilbereich des Eingangs- bzw. Ausgangskonus leitfähig sein, zumindest ein Bereich, in den beispielsweise eine Fixierschraube eingeschraubt oder ein Verbindungsstift eingesteckt wird. Insofern ist die elektrische Verbindung zwischen Eingangskonus und Ausgangskonus nicht so zu verstehen, dass sämtliche Punkte der Oberfläche des Konus leitfähig sein müssen.

Der Winkel α ist vorzugsweise an eine typischerweise zu erwartende Einbausituation angepasst. Je nach verwendetem Anschlusskonus, verwendetem Anschlusskabel und dem Platzangebot im Anschlussraum der elektrischen Anlage ergeben sich unterschiedliche Positionen, an der ein von einem Anschlusskonus abgezogenes Anschlussmittel eines Anschlusskabels liegen kann. Üblicherweise bewegt sich das Anschlussmittel beim Abziehen von dem Anschlusskonus und anschließendem Biegen des Anschlusskabels annähernd auf einem Kreisbogen. Der Konusadapter ist vorzugsweise so ausgebildet, dass er den Platz zwischen Anschlusskonus und dem zurückgebogenen Anschlusskabel ausfüllt. Entsprechend sind die Achsen des Eingangskonus und des Ausgangskonus vorzugsweise parallel zu der Tangente an der Kurve, die durch den Anschlusskonus bei Zurückbiegen des Anschlusskabels nach Abziehen des Anschlussmittels von dem Anschlusskonus beschrieben wird. Da es üblicherweise nicht möglich ist, in jegliche Einbausituation einen exakt passenden Konusadapter anzubieten, könnten Konusadapter mit Winkeln α in diskreten Stufungen angeboten werden. So wäre denkbar, dass Konusadapter mit Winkeln α in einem Abstand von 5° vorgesehen sind. Mit derartigen diskreten Winkelungen dürften die meisten Installationssituationen abdeckbar sein.

Vorzugsweise weist der Konusadapter einen leitfähigen Adapterkern auf, der den Eingangskonus, den Ausgangskonus und den Abzweig elektrisch miteinander verbindet. Der Adapterkern kann prinzipiell aus den verschiedensten leitfähigen Materialien hergestellt sein. Insbesondere im Mittelspannungsbereich hat sich jedoch Messing in verschiedenen Legierungen etabliert, so dass der Adapterkern vorzugsweise aus Messing besteht. Der Adapterkern kann dabei gegossen oder aus einem einzelnen Stück herausgearbeitet, beispielsweise gedreht und/oder gefräst sein.

Zum Verbessern der Aufsteckbarkeit des Konusadapters auf das Anschlussmittel und zum Reduzieren des Platzbedarfs ist der Adapterkern vorzugsweise zweiteilig aufgebaut. Dabei umfasst der Adapterkern einen ersten Adapterkern und einen zweiten Adapterkern, wobei der zweite Adapterkern vorzugsweise zumindest teilweise in einer Ausnehmung in einem ersten Adapterkern angeordnet ist. Die Ausnehmung kann dabei prinzipiell auf verschiedenste Arten gebildet sein. Rechteckige oder dreieckförmige Ausnehmungen sind ebenso denkbar wird rinnenförmige Vertiefungen. Vorzugsweise ist die Ausnehmung jedoch zylindrisch ausgebildet und ist weitgehend durch Material des ersten Adapterkerns umgeben, d.h. es ist lediglich an einem Ende der Ausnehmung eine nennenswerte Öffnung vorhanden. Die Ausnehmung kann auf verschiedene Arten gebildet sein. So kann ein entsprechender Gusskern dafür sorgen, dass sich eine Ausnehmung in dem Gussteil herausbildet. Die Ausnehmung kann jedoch auch durch eine Bohrung in dem ersten Adapterkern hergestellt sein.

Bei zumindest teilweiser Anordnung des zweiten Adapterkerns in einer Ausnehmung in dem ersten Adapterkern kann ein unterschiedlich Großer Anteil des zweiten Adapters aus der Ausnehmung herausragen. Dieser Anteil hängt auch davon ab, wie die Ausnehmung ausgebildet ist. Bei der bevorzugten Ausgestaltung als zylindrische Ausnehmung ist der zweite Adapterkern vorzugsweise weitgehend in der Ausnehmung aufgenommen. Vorzugsweise ragen weniger als 70% der Oberfläche des zweiten Adapterkerns aus dem ersten Adapterkern heraus, besonders bevorzugter Weise weniger als 80%.

Prinzipiell gibt es verschiedene Möglichkeiten, bei einer zweiteiligen Ausgestaltung des Adapterkerns und bei einer Anordnung des zweiten Adapterkerns in dem ersten Adapterkern eine mechanisch stabile Positionierung des zweiten Adapterkerns in dem ersten Adapterkern zu realisieren. Gemäß einer ersten Ausgestaltung könnte in der Ausnehmung in dem ersten Adapterkern ein Innengewinde ausgebildet sein, und auf der Oberfläche des zweiten Adapterkerns oder einem Teil der Oberfläche des zweiten Adapterkerns könnte ein korrespondierendes Außengewinde ausgebildet sein. Dabei können Innengewinde und Außengewinde derart aufeinander abgestimmt sein, dass der zweite Adapterkern in die Ausnehmung des ersten Adapterkerns eingeschraubt werden kann. Auf diese Weise wird der zweite Adapterkern in Längsrichtung der Ausnehmung gehalten und gleichzeitig wird ein Verdrehen des zweiten Adapterkerns innerhalb des ersten Adapterkerns verhindert oder zumindest deutlich erschwert.

In einer zweiten Ausgestaltung könnte zum sicheren Halten des zweiten Adapterkerns in der Ausnehmung des ersten Adapterkerns ein Arretierungsmittel vorgesehen sein. Je nach Ausgestaltung des Arretierungsmittels kann dabei eine Bewegung des zweiten Adapterkerns in zumindest eine Richtung verhindert werden. Dabei kann das Arretierungsmittel in einer Weiterbildung durch eine Nase und eine korrespondierende Vertiefung gebildet sein. Dabei kann die Nase an der Außenseite des zweiten Adapterkerns angebracht sein und die korrespondierende Vertiefung in der Ausnehmung des ersten Adapterkerns. Es wäre jedoch auch denkbar, dass die Nase in der Ausnehmung des ersten Adapterkerns ausgebildet ist und die Vertiefung an der Außenfläche des zweiten Adapterkerns. Für die Funktion zum Verhindern eines Bewegens des zweiten Adapterkerns innerhalb der Ausnehmung des ersten Adapterkerns ist die Anordnung weitgehend unerheblich. Gemäß einer anderen Weiterbildung des könnte das Arretierungsmittel durch eine Arretierungsschraube gebildet sein. Dabei könnte beispielsweise in einer Wandung des ersten Adapterkerns ein Loch mit Gewinde ausgebildet sein, in das eine Madenschraube eingeschraubt werden kann. Dabei wäre denkbar, dass in dem zweiten Adapterkern eine beispielsweise kegelförmige Vertiefung ausgebildet ist, in die eine Spitze der Madenschraube im eingeschraubten Zustand eingreift. Entsprechende Ausgestaltungen einer Arretierungsschraube sind aus der Praxis hinlänglich bekannt.

Dabei wäre es auch denkbar, dass die beiden zuvor genannten Ausgestaltungen miteinander kombiniert werden. So wäre es denkbar, dass ein Innen- und Außengewinde vorgesehen ist und mit einer Madenschraube ein Verdrehen des zweiten Adapterkerns innerhalb des ersten Adapterkerns verhindert wird. Bei Ausgestaltung des Arretierungsmittels in Form einer Nase könnte durch die Nase und die korrespondierende Ausnehmung eine Art Anschlag gebildet sein, der ein Weiterdrehen des zweiten Adapterkerns verhindert. Auch diese Ausgestaltung kann zum sicheren Halten des zweiten Adapterkerns in dem ersten Adapterkern beitragen.

Zum Erleichtern eines Fixierens des Konusadapters auf dem Anschlusskonus der elektrischen Anlage kann in dem ersten Adapterkern eine Öffnung vorgesehen sein, die vorzugsweise an einem Ende der Ausnehmung in dem ersten Adapterkern angeordnet ist. Vorzugsweise ist die Öffnung dabei koaxial zu der Ausnehmung für den zweiten Adapterkern. Die Öffnung ist derart angeordnet und ausgebildet, dass ein Fixiermittel zum Fixieren des Konusadapters auf dem Anschlusskonus durch die Öffnung geführt und anschließend das Fixiermittel auf dem Anschlusskonus befestigt werden kann. Ein derartiges Fixiermittel kann beispielsweise durch eine Fixierschraube gebildet sein. Durch das Vorsehen einer derartigen Öffnung in der Ausnehmung des ersten Adapterkerns wird das Montieren des Konusadapters erheblich erleichtert. Bei Montage des Konusadapters würde zunächst der Konusadapter mit entferntem zweiten Adapterkern auf den Anschlusskonus gesteckt und mit einem Fixiermittel fixiert. Anschließend würde der zweite Adapterkern in die Ausnehmung gebracht und dadurch eine Montage des Anschlussmittels auf dem Ausgangskonus ermöglicht.

Zum Fixieren des Anschlussmittels auf dem Ausgangskonus kann in dem zweiten Adapterkern und/oder dem ersten Adapterkern eine Buchse ausgebildet sein, die ein Fixieren des Anschlussmittels auf dem Ausgangskonus ermöglicht. Bevorzugter Weise ist diese Buchse als Gewindebuchse ausgebildet, so dass der Anschlusskonus an dem Ausgangskonus festgeschraubt werden kann. In besonders bevorzugter Weise ist die Buchse derart ausgebildet, dass ein erster Teil der Buchse in dem ersten Adapterkern und ein zweiter Teil der Buchse in dem zweiten Adapterkern gebildet ist. Auf diese Weise kann ebenfalls besonders wirkungsvoll ein Verdrehen des zweiten Adapterkerns in dem ersten Adapterkern verhindert werden. Insbesondere bei Ausgestaltung der Buchse in Form einer Gewindebuchse kann zudem ein Bewegen in Längsrichtung der Ausnehmung des ersten Adapterkerns verhindert werden, auch wenn kein weiteres Arretierungsmittel oder ein Innen- bzw. Außengewinde an dem ersten bzw. zweiten Adapterkern vorgesehen ist.

Als Zusatznutzen des Konusadapters kann in dem Konusadapter ein Sensor integriert sein, mit dem elektrische Eigenschaften an dem Anschlusskonus gemessen werden können. Denkbar wäre beispielsweise, dass der Sensor den zwischen Eingangskonus und Ausgangskonus fließenden Strom misst. Hierzu kann beispielsweise ein Sensor ringförmig um den Eingangskonus, den Ausgangskonus oder einen Teil des Adapterkerns ausgebildet sein, in dem der zwischen Eingangs- und Ausgangskonus fließende Strom eine Spannung induziert. Da in den hier relevanten elektrischen Anlagen üblicherweise Wechselströme mit 50 oder 60 Hertz fließen, würde in einem derart ausgestalteten Sensor eine von dem fließenden Strom anhängige Spannung induziert, die einen Rückschluss auf den fließenden Strom zulässt.

In einer anderen Ausgestaltung des Sensors könnte dieser eine an dem Eingangskonus anliegende Spannung messen. Dabei kann der Sensor kapazitiv oder über Widerstände realisiert sein. Geeignete Spannungsmessvorrichtungen sind aus der Praxis bekannt.

In einer Weiterbildung des Konusadapters kann der Abzweig mit einem Außenkonus und/oder einem Innenkonus verbunden sein. Auf diese Weise kann an den Abzweig ein weiteres Kabel, beispielsweise zur Versorgung eines Endgeräts, verbunden werden. Denkbar wäre auch, einen Koppler an den Außen-/lnnenkonus an dem Abzweig anzuschließen. Durch Vorsehen eines Außen-/lnnenkonus an dem Abzweig kann der Konusadapter besonders flexibel genutzt werden.

In einer anderen Weiterbildung kann der Abzweig direkt mit einem Koppler verbunden sein, der in diesem Fall in dem Gehäuse des Konusadapters integriert ist. In einer bevorzugten Ausgestaltung ist der Koppler dabei als kapazitiver Koppler ausgebildet und besteht aus einer Koppelkapazität und gegebenenfalls ergänzend einem Koppelnetzwerk. Dabei kann der Koppler dazu ausgebildet sein, einen Anschluss für ein PLC (Powerline Communication)-Endgerät oder ein BPL (Breitband Powerline)-Endgerät zur Verfügung zu stellen. Gleichzeitig wäre auch denkbar, dass durch den Koppler das Auskoppeln eines Messsignals aus dem Energieversorgungsnetzwerk, das mit dem Anschlusskonus verbunden ist, auszubilden. Auf diese Weise kann ein kompaktes Gerät entstehen, das insbesondere dann besonders vorteilhaft eingesetzt werden kann, wenn durch Installation des Konusadapters ein entsprechender Koppler installiert werden soll.

Prinzipiell wäre auch denkbar, dass beide zuvor genannten Weiterbildungen kombiniert sind, dass nämlich mit dem Abzweig einerseits ein Koppler und andererseits ein Innen- und/oder Außenkonus verbunden sind. Dadurch kann sowohl die Koppelfunktionalität als auch ein Anschluss für ein weiteres Gerät, beispielsweise einen Verbraucher oder ein Messgerät, zur Verfügung gestellt werden. Da ein derartiger Konusadapter größer sein dürfte als ein Konusadapter mit entweder einem Koppler oder einem Innen-/Außenkonus, kann der in einem Anschlussraum einer elektrischen Anlage vorhandene Platz für die Installation nicht ausreicht. Dies kann insbesondere in kompakten elektrischen Anlagen vorkommen. Allerdings sind durchaus Anwendungsszenarien denkbar, in der eine derartige Kombination Verwendung finden können.

In besonders bevorzugter Weise sind die Funktionselemente des Konusadapter, beispielsweise der Adapterkern und der Koppler, in einem Gehäuse aus einem isolierenden Material angeordnet. Als geeignetes Material wäre beispielsweise Silikonkautschuk oder ein Kunststoff denkbar. Dabei kann in dem Gehäuse ein Abschnitt definiert sein, in dem beispielsweise eine Koppelkapazität, ein Koppelnetzwerk und/ oder eine oder mehrere Platinen zum Bereitstellen von Funktionen (beispielsweise das Aufbereiten von empfangenen oder zu versendenden PLC-Signalen oder von Sensorsignalen), angeordnet sein können. Vorzugsweise ist dieser Abschnitt des Gehäuses zylindrisch ausgebildet, wodurch beispielsweise die zuvor genannte Koppelkapazität die üblicherweise zylindrisch ausgebildet ist, besonders gut aufgenommen werden kann.

Durch die Ausgestaltung des erfindungsgemäßen Konusadapters kann ein Zwischenschalten des Konusadapters zwischen einen Anschlusskonus einer elektrischen Anlage und einem Anschlussmittel wie folgt vonstatten gehen. Sofern das Anschlussmittel mit einem Fixiermittel auf den Anschlusskonus fixiert ist, würde in einem ersten Schritt das Fixiermittel gelöst. In der weit verbreiteten Ausgestaltung eines Fixiermittels als Fixierschraube würde das Lösen des Fixiermittels in einem Herausschrauben der Fixierschraube bestehen.

In einem nächsten Schritt würde das Anschlussmittel von dem Anschlusskonus abgezogen werden. Dadurch kann in einem weiteren Schritt das mit dem Anschlussmittel verbundene Kabel zurückgebogen und in einem weiteren Schritt das Kabel zurückgebogen werden. Auf diese Weise entsteht ein Zwischenraum, in den der Konusadapter eingefügt werden kann. In einem nächsten Schritt würde dann der Eingangskonus des Konusadapters auf dem Anschlusskonus aufgesteckt und - sofern ein Fixiermechanismus vorgesehen ist - in einem weiteren Schritt auf dem Anschlusskonus mittels eines weiteren Fixiermittels fixiert. Anschließend würde das Anschlussmittel auf dem Ausgangskonus des Konusadapters aufgesteckt und - sofern ein Fixiermechanismus vorgesehen ist - dort mit einem weiteren Fixiermittel fixiert.

Anschlusskonus, Konusadapter und ein Anschlussmittel bilden ein elektrisches Verbindungssystem, das die zuvor beschriebenen Funktionen aufweisen kann. Ein derartiges System oder mehrere derartige Systeme können in einer elektrischen Anlage integriert sein, bei der der Anschlusskonus bzw. die Anschlusskonen des mindestens einen Systems mit einer elektrischen Funktionseinheit der elektrischen Anlage verbunden sind. Wenn die elektrische Anlage beispielsweise durch eine Schaltanlage gebildet ist, wäre die elektrische Funktionseinheit derart der zugehörige Schalter.

Es gibt nun verschiedene Möglichkeiten, die Lehre der vorliegenden Erfindung in vorteilhafter Weise auszugestalten und weiterzubilden. Dazu ist einerseits auf die dem Anspruch 1, 11 bzw. 13 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: verschiedene Ansichten einer aus der Praxis bekannten Schaltanlage,
- Fig. 2: verschiedene Ansichten der Schaltanlage nach Fig. 1 mit abgezogenem Anschlussmittel des Anschlusskabels,
- Fig. 3: verschiedene Ansichten der Schaltanlage nach Fig. 2 mit einem aufgesteckten erfindungsgemäßen Konusadapter,
- Fig. 4: verschiedene Ansichten der Schaltanlage nach Fig. 3 mit aufgestecktem Anschlussmittel auf einem Ausgangskonus des Konusadapters,
- Fig. 5: verschiedene Ansichten eines Ausführungsbeispiels eines erfindungsgemäßen Konusadapters mit einem integrierten Koppler,
- Fig. 6: weitere Ansichten der erfindungsgemäßen Konusadapters nach Fig. 5,
- Fig. 7: verschiedene Ansichten eines Ausführungsbeispiels eines erfindungsgemäßen Konusadapters mit einem Außenkonus an einem Abzweig,
- Fig. 8: verschiedene Ansichten eines Ausführungsbeispiels eines erfindungsgemäßen Konusadapters mit einem Innenkonus an einem Abzweig,
- Fig. 9: verschiedene Ansichten eines Ausführungsbeispiels eines Adapterkerns eines erfindungsgemäßen Konusadapters in zerlegtem Zustand und
- Fig. 10: verschiedene Ansichten des Ausführungsbeispiels nach Fig. 9 in zusammengesetztem Zustand und mit Stromsensor.

Ein vorhandener Kabelendverschluss ist in der Regel L-förmig ausgeführt, so dass eigentlich keine Erweiterung möglich wäre. Da bei Schaltanlagen im Mittelspannungsbereich selten Erweiterung zu erwarten sind und das Bereitstellen einer Erweiterungsmöglichkeit mit zusätzlichem Aufwand und zusätzlichen Kosten verbunden ist, ist dieser Ansatz weit verbreitet.

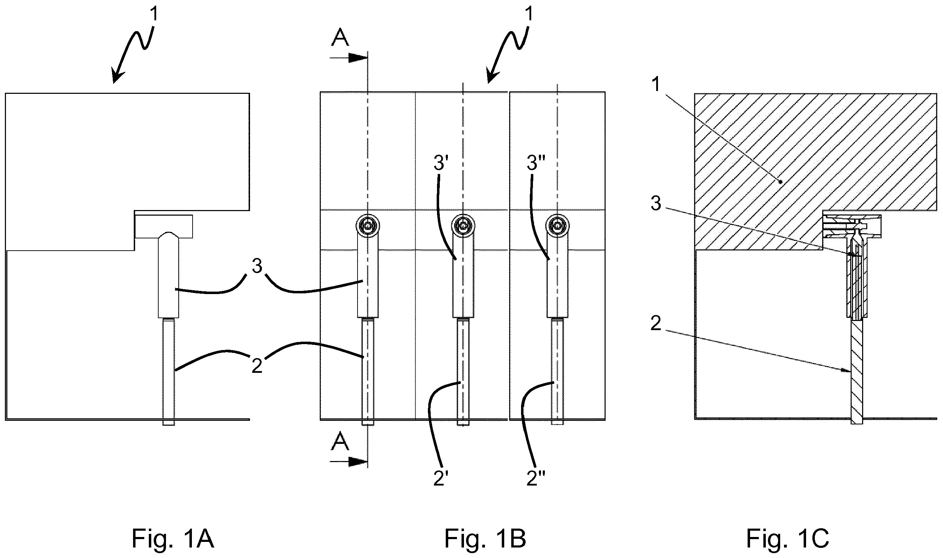

Verschiedene Ansichten einer aus der Praxis bekannten Schaltanlage sind in den drei Teilfiguren der Fig. 1 dargestellt: Fig. 1A zeigt eine Seitenansicht, Fig. 1B eine Frontansicht und Fig. 1C einen Schnitt längs Linie A - A. Die Schaltanlage selbst ist vereinfacht als Block dargestellt und mit dem Bezugszeichen 1 gekennzeichnet. Innerhalb der Schaltanlage befinden sich die eigentlichen Schalter, die im Falle einer SF6-Anlage in dem Schutzgas Schwefelhexafluorid angeordnet sind. Mit der Schaltanlage 1 verbunden sind drei Mittelspannungskabel 2, 2', 2" (MV-Kabel), die jeweils an dem der Schaltanlage 1 zugewandten Ende einen L-förmigen Kabelendverschluss 3, 3', 3" mit Außenkonus aufweisen. Jeder der Außenkonusse ist jeweils auf einen Innenkonus der Schaltanlage gesteckt und mit diesem verschraubt, wobei jeder der Innenkonusse jeweils mit einer der drei Phasen der Schaltanlage verbunden ist. Die MV-Kabel 2, 2', 2" sind üblicherweise im Boden oder Kabelkeller (in Fig. 1 als waagrechter Strich unterhalb der Schaltanlage 1 angedeutet) verlegt und durch eine Öffnung in den Anschlussbereich zwischen Schaltanlage und Boden geführt. Die Kabel sind üblicherweise passend abgelängt, so dass sie nicht nachgezogen werden können.

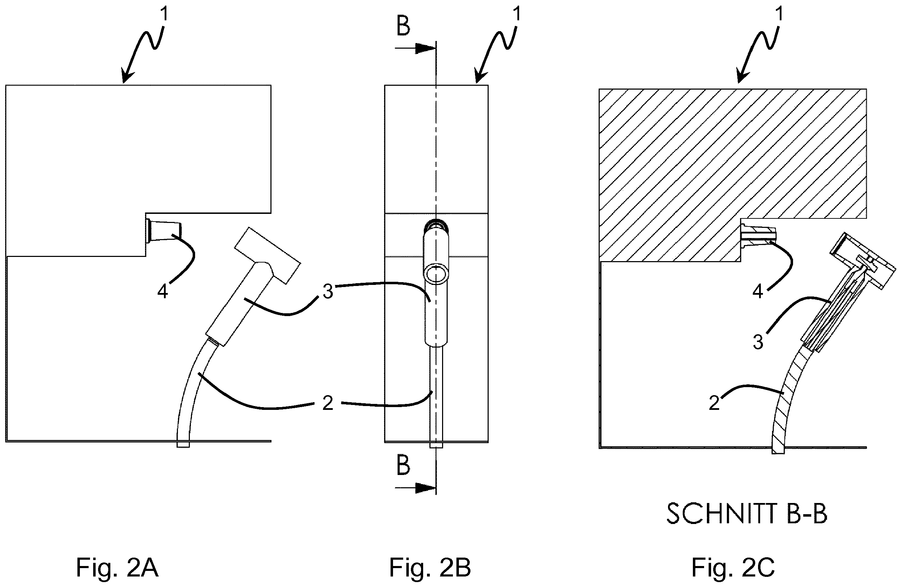

Für das Installieren eines erfindungsgemäßen Konusadapters an dem/den vorhandenen MV-Kabel/n wird die Verschraubung des Kabelendverschlusses 3 gelöst und das MV-Kabel zurückgebogen. Fig. 2 zeigt verschiedene Ansichten der Situation, bei der das MV-Kabel zurückgebogen ist, wobei der Übersichtlichkeit wegen in der Frontansicht der Fig. 2B lediglich eine Phase dargestellt ist. Fig. 2A stellt eine Seitenansicht dar, Fig. 2C ein Schnitt entlang Linie B - B. Durch das Zurückbiegen des MV-Kabels 2 entsteht zwischen Anschlusskonus 4 der Schaltanlage 1 und dem Kabelendverschluss 3 ein Zwischenraum, in den ein erfindungsgemäßer Konusadapter 5 eingesetzt werden kann.

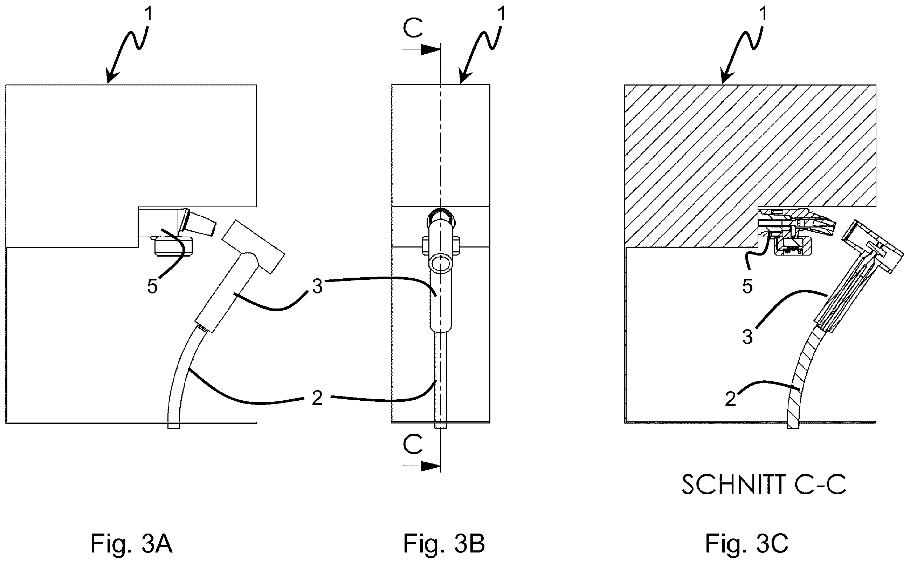

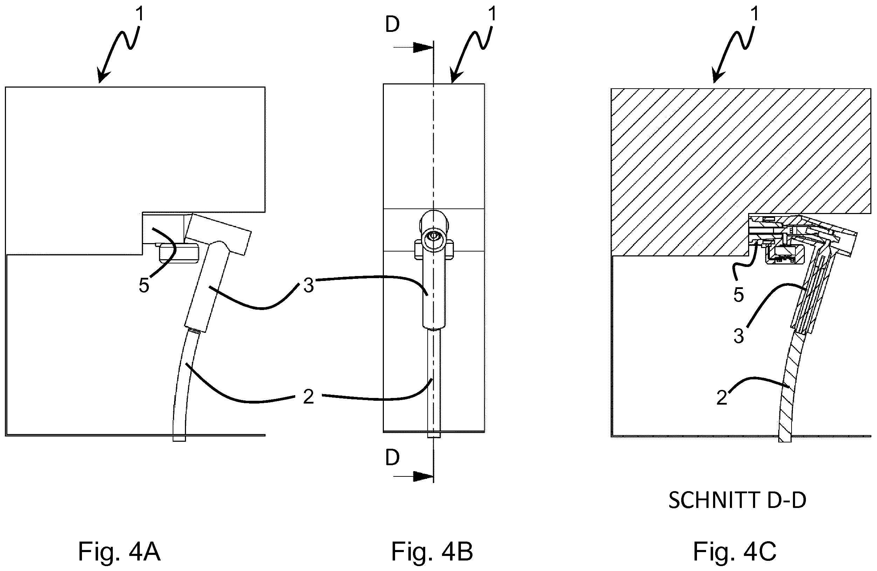

In den verschiedenen Ansichten der Fig. 3 ist das Ergebnis eines ersten Montageschritts dargestellt, bei dem der Konusadapter 5 auf dem Anschlusskonus 4 montiert ist. Nach der Montage des Konusadapters 5 wird das vorhandene Kabel 2 auf den Konusadapter 5 montiert. Das Ergebnis der Montage ist in den verschiedenen Ansichten der Fig. 4 dargestellt. Damit muss der vorhandene Kabelendverschluss 3 am Kabel nicht erneut aufgebaut und z.B. durch einen T-Stecker ersetzt werden.

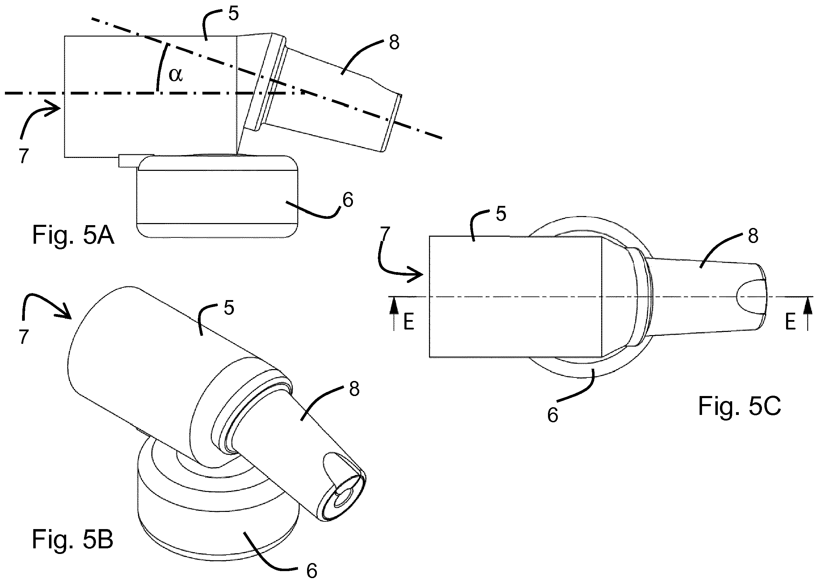

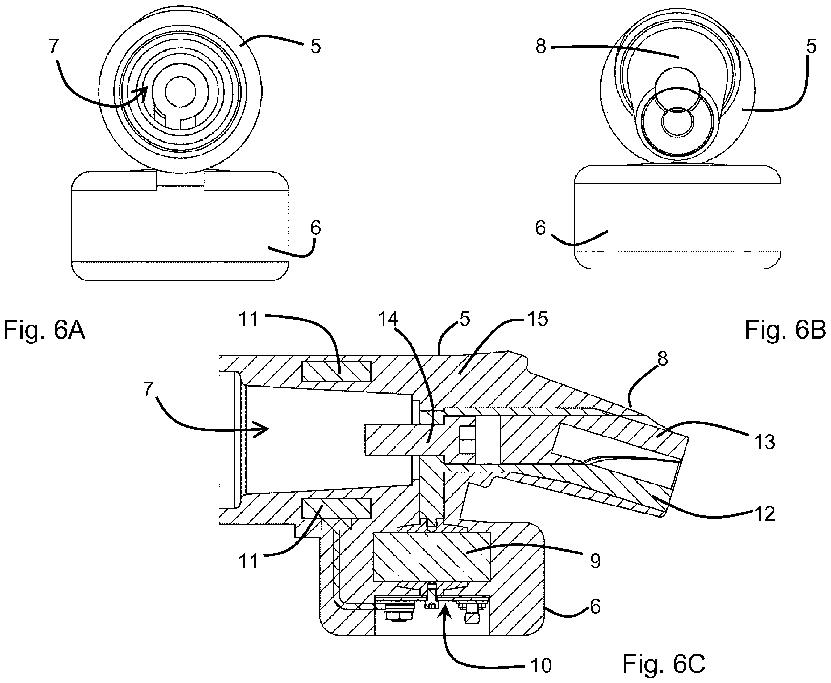

Verschiedene Detailansichten eines Ausführungsbeispiels eines erfindungsgemäßen Konusadapters 5 sind in den Figuren 5 und 6 dargestellt, wobei der Konusadapter 5 in dieser Ausgestaltung einen Koppelkondensator und ein Koppelnetzwerk zum Anschluss eines PLC/BPL-Endgeräts (PLC = Power Line Communication; BPL = Breitband Power Line) aufweist. Fig. 5A zeigt eine Seitenansicht des Konusadapters, Fig. 5B eine Schrägansicht und Fig. 5C eine Ansicht von oben. Ein zylindrischer Abschnitt 6 im unteren Bereich des Konusadapters 5 enthält die Koppelkapazität und das Koppelnetzwerk. In der Darstellung nach Fig. 5A ist links im Konusadapter ein Eingangskonus 7 ausgebildet, der als Außenkonus und zur Aufnahme des Anschlusskonus 4 der Schaltanlage 1 ausgebildet ist. Auf der rechten Seite des Konusadapters 5 ist ein Ausgangskonus 8 ausgebildet, der ähnlich wie der Anschlusskonus 4 aufgebaut ist, für dessen Aufnahme der Eingangskonus 7 ausgebildet ist. Idealerweise sind die Abmessungen der Anschlusskonus 4 und die des Ausgangskonus 8 weitgehend identisch. Es ist deutlich zu erkennen, dass die Achse des Eingangskonus 7 nicht parallel zu der Achse des Ausgangskonus 8 ist (jeweils als gestrichelte Linie dargestellt) und dass die beiden Achsen einen Winkel α einschließen. Der Winkel α beträgt in der dargestellten Ausgestaltung ca. 18° und ist an das Biegeverhalten eines MV-Kabels und an die Einbausituation in einer Schaltanlage angepasst. Je weniger Platz im Anschlussbereich zwischen Schaltanlage 1 und Boden verbleibt, desto größer ist der Winkel. Übliche Winkel werden sich zwischen 10° und 30° bewegen.

Fig. 6A zeigt eine Ansicht des Konusadapters 5 von der Seite des Eingangskonus 7, Fig. 6B eine Ansicht von der Seite des Ausgangskonus 8. Fig. 6C zeigt einen Schnitt längt der Achse E - E gemäß Fig. 5C. In Fig. 6C ist eine Koppelkapazität 9 und ein Koppelnetzwerk 10 zu erkennen, die in dem zylindrischen Abschnitt 6 des Konusadapters 5 angeordnet sind. Gleichzeitig ist ein Strommesser 11 zu erkennen, der ringförmig um den Eingangskonus 7 herum angeordnet ist und mit einer Platine des Koppelnetzwerks 10 verbunden ist. Auf der Platine seien in dieser Ausgestaltung entsprechende Bauteile angeordnet, die zur Verarbeitung des Messwerts des Strommessers 11 (beispielsweise zur Aufbereitung und Digitalisierung) ausgebildet sind. Zusätzlich können Bauteile auf der Platine vorgesehen sein, mit denen die Messwerte paketiert und über das Koppelnetzwerk 10 und die Koppelkapazität 9 als PLC-Signale über das Energieversorgungsnetzwerk übertragen werden können.

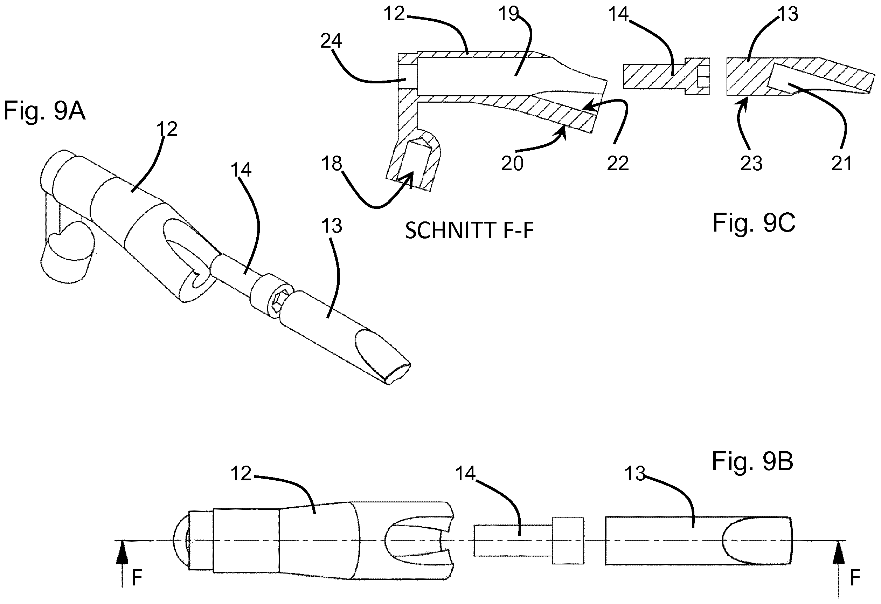

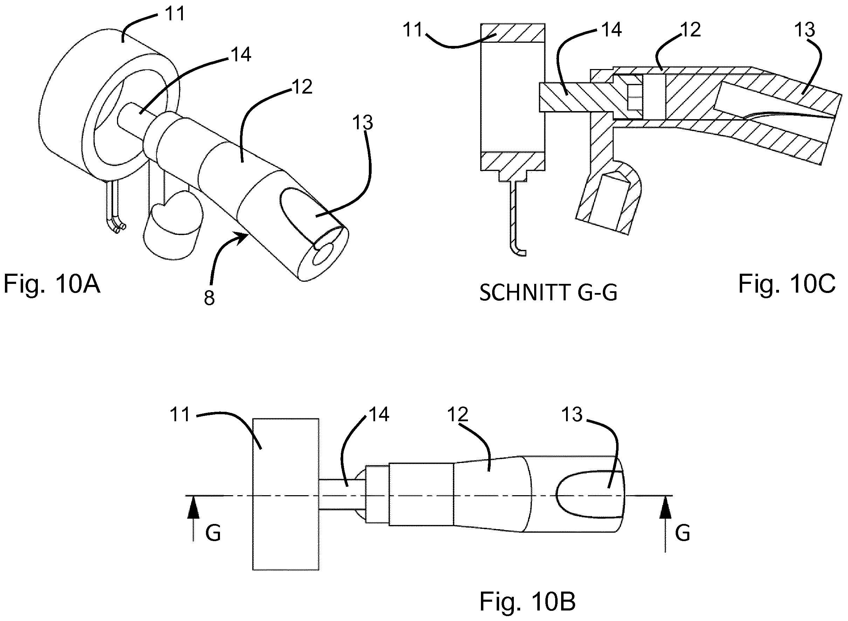

Der Konusadapter 5 gemäß Fig. 6C umfasst ferner einen ersten Adapterkern 12 und einen zweiten Adapterkern 13, wobei der zweite Adapterkern 13 in eine Ausnehmung in dem ersten Adapterkern 12 eingesteckt, vorzugsweise eingeschraubt, ist. Die Ausnehmung kann dabei durch eine Bohrung gebildet sein. Sowohl der erste als auch der zweite Adapterkern sind dabei aus einem leitfähigen Material hergestellt. Ein nach unten weisender Teil des ersten Adapterkerns 12 bildet den Abzweig und ist in dieser Ausgestaltung mit einem Außengewinde versehen, in das die Koppelkapazität 9 eingeschraubt ist. Der in Fig. 6C linke Teil des ersten Adapterkerns 12 ist mit dem Eingangskonus 7 verbunden. Der in Fig. 6C rechte Teil des ersten bzw. zweiten Adapterkerns 12, 13 bilden den Ausgangskonus. Die beiden Adapterkerne 12, 13 werden mit Bezug auf die Figuren 9 und 10 noch genauer beschrieben. Zum Fixieren des Konusadapters 5 an einem Anschlusskonus 4 ist eine Fixierschraube 14 mit Innensechskantkopf vorgesehen, die in eine Gewindebuchse in dem Anschlusskonus 4 einschraubbar ist, wenn der Konusadapter 5 auf den Anschlusskonus 4 gesteckt ist. Die zuvor beschriebenen Elemente des Konusadapters 5 sind in einem Isolierkörper 15 eingebettet, der die elektrisch leitfähigen Teile des Konusadapter gegen Berührung schützt und Kriechströme vermeidet.

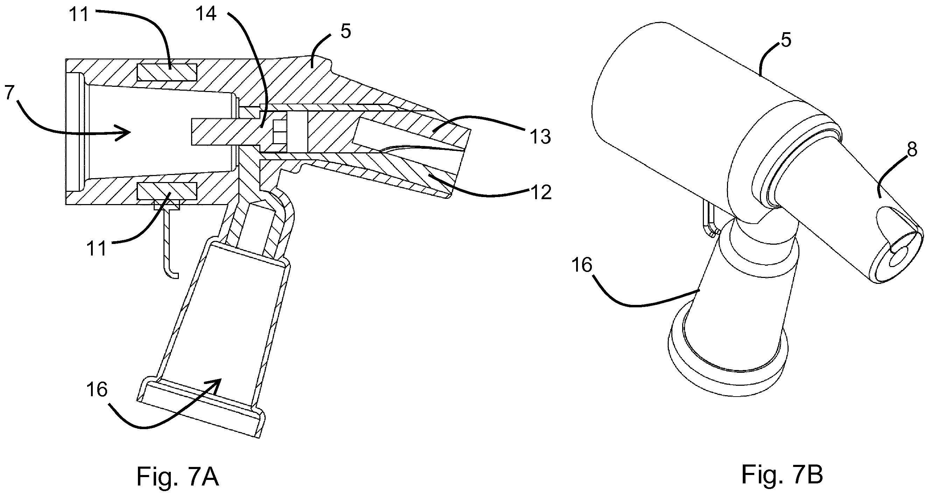

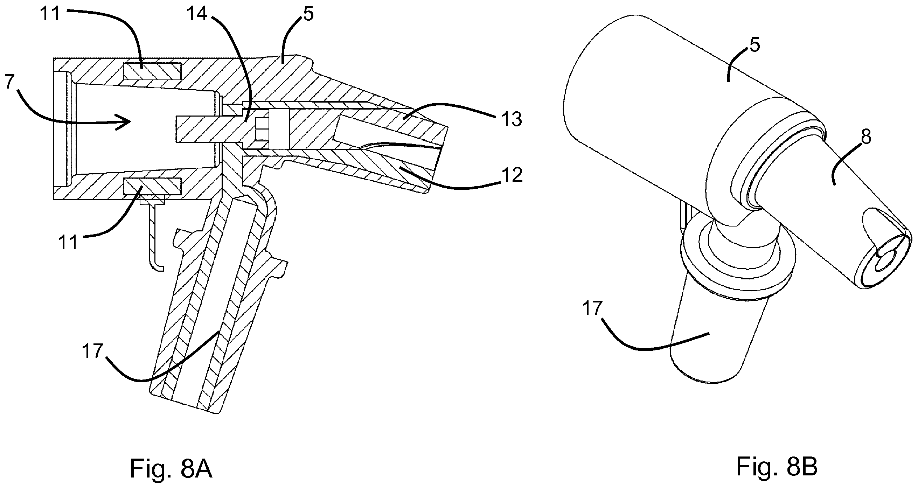

In den Figuren 7 und 8 sind verschiedene Ausführungen eines Abzweigs zum Anschluss eines Kabels oder eines Gerätes in einem Schnitt (jeweils Figurenteil A) und in einer Schrägansicht (jeweils Figurenteil B) dargestellt. Fig. 7 zeigt einen Abzweig 16 mit Außenkonus (trichterförmiger Bereich am unteren Teil des Konusadapters), wodurch ein Innenkonus mit dem Abzweig 16 verbunden werden kann. Fig. 8 zeigt einen Abzweig 17 mit Innenkonus, wodurch ein Außenkonus mit dem Abzweig verbunden werden kann. Damit können Sensoren, wie z.B. Zeliski SMVS-UW100X, mit dem Abzweig des Konusadapters verbunden werden. Der Konusadapter kann als Abzweig und/oder als Anschluss für Equipment mit genormtem Konus verwendet werden. Dadurch ist auch der Anschluss eines weiteren Energiekabels mit geeignetem Endverschluss (Axial-Endverschluss / nicht L-Bow) möglich. Dadurch kann eine elektrische Verzweigung / Aufteilung der Mittelspannung realisiert werden.

Fig. 9 und 10 zeigen eine Ausgestaltung eines inneren, elektrisch leitenden Kern eines erfindungsgemäßen Konusadapters, der dazu ausgebildet ist, durch Verschraubung mit einer Schaltanlage verbunden zu werden. Fig. 9 zeigt den Kern in zerlegtem Zustand, Fig. 10 im zusammengesetzten Zustand, wobei in Fig. 10 zusätzlich ein Strommesser 11 zu erkennen ist. Fig. 9A und 10A zeigen jeweils eine Schrägansicht, Fig. 9B und 10B eine Ansicht von oben und die Figuren 9C bzw. 10C einen Schnitt entlang der Line F - F bzw. G - G.

Der innere Kern besteht aus einem ersten Adapterkern 12 und einem zweiten Adapterkern 13. An einem Ende des ersten Adapterkerns 12 (in Fig. 9C links unten zu erkennen) ist eine Gewindebuchse 18 ausgebildet, in die eine Schraube zum Fixieren eines Konus eines mit dem Abzweig des Konusadapters verbundenen Kabels eingeschraubt werden kann. Durch eine Bohrung 19 im ersten Adapterkern 12, die parallel zu einer Längsausdehnung des ersten Adapterkerns 12 hergestellt ist, ist eine Fixierschraube 14 führbar, die zum Fixieren des Konusadapters 5 auf einem Anschlusskonus 4 nutzbar ist. Hierzu ist auf der in Fig. 9C linken Seite der Bohrung eine Öffnung 24 ausgebildet, durch die die Fixierschraube 14 führbar ist und durch die ein Rand zum Abstützen der Fixierschraube im eingeschraubten Zustand gebildet ist. Ferner ist auf zumindest einem Teil der Innenseite der Bohrung 19 ein Innengewinde ausgebildet, in das der zweite Adapterkern 13 eingeschraubt werden kann. Der zweite Adapterkern 13 weist hierzu zumindest an einem Teil seiner Außenseite ein korrespondierendes Außengewinde 23 auf.

Eine Abschrägung 20 an dem ersten Adapterkern 12 und der in die Bohrung 19 eingeschraubte zweite Adapterkern 13 vervollständigen den leitfähigen Teil des Ausgangskonus 8, wobei die Form des gesamten Ausgangkonus zusätzlich durch den Isolierkörper gebildet ist. In dem zweiten Adapterkern 13 ist an der in Fig. 9C nach unten gewandten Seite ein erster Teil 21 einer Gewindebuchse ausgebildet, in die eine Fixierschraube zum Fixieren des auf den Ausgangskonus aufgesetzten MV-Kabels 2 schraubbar ist. Ein zweiter Teil 22 der Gewindebuchse ist an der Innenseite der Abschrägung 20 ausgebildet. Dabei bilden der erste Teil 21 und der zweite Teil 22 gemeinsam die Gewindebuchse. Zum Herstellen der Gewindebuchse mit den ersten und zweiten Teilen 21, 22 kann zunächst das Gewinde in der Bohrung 19 und das Außengewinde 23 an dem zweiten Adapterkern 13 hergestellt werden. Basis für den zweiten Adapterkern 13 kann dabei ein Gewindestab sein. Nach Einschrauben und Fixieren der zweiten Adapterkerns 13 im ersten Adapterkern 12 wird eine Bohrung hergestellt und ein Innengewinde in die Bohrung geschnitten. Dadurch entsteht der erste Teil 21 und zweite Teil 22 der Gewindebuchse im ersten und zweiten Adapterkern 12, 13.

Durch die Zweiteilung der Kerns und eine derart gebildete Gewindebuchse kann zum einen eine Verschraubung des Konusadapters 5 axial zum Anschlusskonus 4 der Schaltanlage 1 erfolgen, da eine Fixierschraube bei entferntem zweiten Adapterkern 13 durch die Bohrung 19 und die Öffnung 24 führbar ist. Zum andern wird durch den ersten und zweiten Teil 21, 22 der Gewindebuchse eine Verschraubung des MV-Kabels 2 an dem Konusadapter ermöglicht. Durch die unterschiedliche Richtung der Achsen des Eingangs- und des Ausgangskonus 7, 8 lässt sich der Konusadapter auf verschiedene Anschlusssituationen anpassen. Durch unterschiedliche Gestaltung des unteren Teils der ersten Adapterkerns lässt sich ein weiterer Anschlusskonus fixieren (Ausgestaltung eines Abzweigs mit Gewindebuchse 18) oder eine Koppelkapazität 9 aufschrauben (Ausbilden eines Gewindes an der unteren Seite des ersten Adapterkerns 12). Ein Abzweig lässt sich sowohl als Außen- als auch als Innenkonus ausbilden. Auf diese Weise liegt ein äußerst flexibel einsetzbarer Konusadapter vor, der in Bestandsanlagen einen Abzweig bzw. die Installation von Kopplern ermöglicht, ohne die bestehende Anlage oder das MV-Anschlusskabel umbauen zu müssen.

Der Konusadapter kann einen Sensor (eventuell mit Elektronik) zur Strommessung enthalten. Beispielsweise kann ein Ferritkern um den Leiter enthalten sein, wie diese beispielhaft in Fig. 6C oder 10 zu erkennen ist.

In dem Konusadapter kann ein Sensor (eventuell mit Elektronik) zur Spannungsmessung integriert sein. Diese kann z.B. kapazitiv oder über Widerstände realisiert werden

Der Konusadapter kann als Abzweig einen kleineren Anschlusskonus wie der zu adaptierende Konus enthalten, z.B. von Anschlusstyp C auf Anschlusstyp A.

Verschiedene Ausgestaltungen eines derartigen Konusadapters und deren jeweilige Vorteile sind nachfolgend angeführt:
1. Der Konusadapter ist so geformt, dass er bei Zurückbiegen eines bereits verbauten Energiekabels mit Endverschluss in die dadurch resultierende Lücke zwischen Endverschluss und Anschlusskonus passt.
2. Beim Erweitern der Schaltanlage muss der vorhandene Endverschluss nicht ausgetauscht werden.
3. Der Konusadapter ermöglicht es, ein weiteres MV-Kabel, ein Messgerät oder einen kapazitiven Koppler an die steckbare Verbindung der Schaltanlage anzuschließen. Dadurch ermöglicht der Konusadapter eine einfache Erweiterbarkeit der Anlage.
4. Der Konusadapter kann eine innenliegende Schraubenaufnahme im Verbindungskern aufweisen, die eine Verschraubung mit dem vorhandenen Endverschluss an der elektrischen Anlage erlaubt.
5. Die Verschraubung des Konusadapters kann axial zum Konus der Schaltanlage erfolgen.
6. Der Konusadapter kann eine integrierte Messeinrichtung zum Messen des Stroms enthalten.
7. Der Konusadapter kann eine integrierte Messeinrichtung zum Messen der Spannung enthalten.
8. Der Konusadapter kann eine kapazitive Einkopplung für die Übertragung von Powerline-Signalen enthalten. Dabei kann der Konusadapter ein integriertes Koppelnetzwerk oder Platine zum Verarbeiten von Mess- und Kommunikationsdaten enthalten.
9. Konus-Reduzierung z.B. von Anschlusstyp C auf Anschlusstyp A

Auch wenn sich die Ausführungen zu den Ausführungsbeispielen weitgehend auf eine SF6-Schaltanlage beziehen, so wird ein Fachmann erkennen, dass die beschriebene Lehre auch auf andere Anlagen übertragbar ist. Auch ist die Erfindung nicht zwangsläufig auf Mittelspannungsanlagen beschränkt, auch wenn dies das bevorzugte Anwendungsgebiet ist.

Der erfindungsgemäße Konusadapter ist so geformt, dass ein vorhandenes Kabel mit Endverschluss in seiner Lage weder gestaucht noch gestreckt werden muss, sondern lediglich das Kabel gebogen werden muss (z.B. an der Durchführung zum Kabelkeller). Dabei ist zu beachten, dass der maximale Biegeradius eines Kabels nicht unterschritten wird, was in üblichen Anlagen jedoch nahezu immer möglich ist. Der Konusadapter kann je nach Anschlusstyp unterschiedliche Winkel zum vorhandenen Schaltanlagenkonus aufweisen. Das System funktioniert unabhängig davon, ob Außenkonusse oder Innenkonusse als Adapter verwendet werden. In den Figuren ist exemplarisch eine Schaltanlage mit drei horizontal nebeneinanderliegenden Außenkonen betrachten, die einen gewinkelten Endverschluss aufnehmen. Prinzipiell ist ein solcher Konusadapter auch bei Anlagen möglich, die hintereinanderliegende Anschlusskonen von oben, wie z.B. bei der Driescher Minex C, montiert werden und gerade Endverschlüsse besitzen. Der Winkel und Lage des abgehenden Konus für den wieder zu montierenden Endverschluss hängt von der Einbausituation ab und davon, was der Abgang für eine Funktion (z.B. Messeinrichtung, Kommunikationskoppler, Anschluss eines weiteren Energiekabels) erfüllen soll.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Konusadapters lediglich zur Erörterung der beanspruchten Lehre dienen, diese jedoch nicht auf die Ausführungsbeispiele einschränken.

### Bezugszeichenliste

- 1: Schaltanlage
- 2: Mittelspannungskabel
- 3: Kabelendverschluss
- 4: Anschlusskonus (an Schaltanlage)
- 5: Konusadapter
- 6: Zylindrischer Abschnitt
- 7: Eingangskonus
- 8: Ausgangskonus
- 9: Koppelkapazität
- 10: Koppelnetzwerk
- 11: Strommesser
- 12: Erster Adapterkern
- 13: Zweiter Adapterkern
- 14: Fixierschraube
- 15: Isolierkörper
- 16: Abzweig mit Außenkonus
- 17: Abzweig mit Innenkonus
- 18: Gewindebuchse (für Abzweig)
- 19: Ausnehmung
- 20: Abschrägung
- 21: Erster Teil einer Gewindebuchse
- 22: Zweiter Teil einer Gewindebuchse
- 23: Außengewinde
- 24: Öffnung

## Patentansprüche

1. Konusadapter zum Zwischenschalten zwischen einem Anschlusskonus (4) einer elektrischen Anlage, insbesondere einer Mittelspannungsanlage, und einem Anschlussmittel (3, 3', 3"), das zum Aufstecken auf den Anschlusskonus (4) ausgebildet ist, wobei der Konusadapter (5) einen Eingangskonus (7) und einen Ausgangskonus (8) aufweist, wobei der Eingangskonus (7) und der Ausgangskonus (8) elektrisch leitend miteinander verbunden sind, wobei der Eingangskonus (7) zum Aufstecken auf den Anschlusskonus (4) ausgebildet ist und wobei der Ausgangskonus (8) derart ausgebildet ist, dass das Anschlussmittel (3, 3', 3") auf den Ausgangskonus (8) aufsteckbar ist,
**dadurch gekennzeichnet, dass** der Konusadapter zusätzlich einen Abzweig aufweist, wobei der Eingangskonus (7), der Ausgangskonus (8) und der Abzweig mittels eines Adapterkerns elektrisch leitend miteinander verbunden sind, dass sowohl bei dem Eingangskonus (7) als auch bei dem Ausgangskonus (8) jeweils eine Achse definiert ist und dass die Achse des Eingangskonus (7) und die Achse des Ausgangskonus (8) einen Winkel α einschließen, wobei der Winkel α zwischen 10° und 35° beträgt.

2. Konusadapter nach Anspruch 1, **dadurch gekennzeichnet, dass** der Adapterkern zweiteilig aufgebaut ist und einen ersten Adapterkern (12) und einen zweiten Adapterkern (13) umfasst, wobei der zweite Adapterkern (13) vorzugsweise zumindest teilweise in einer Ausnehmung (19) in dem ersten Adapterkern (12) angeordnet ist, wobei die Ausnehmung (19) vorzugsweise zylindrisch ausgebildet ist.

3. Konusadapter nach Anspruch 2, **dadurch gekennzeichnet, dass** zumindest ein Teil der Ausnehmung (19) in dem ersten Adapterkern (12) ein Innengewinde aufweist, dass zumindest ein Teil des zweiten Adapterkerns (13) ein Außengewinde (23) aufweist, wobei das Innengewinde und das Außengewinde (23) derart aufeinander abgestimmt sind, dass der zweite Adapterkern (13) in die Ausnehmung (19) des ersten Adapterkerns (12) einschraubbar ist.

4. Konusadapter nach Anspruch 2 oder 3, **dadurch gekennzeichnet, dass** ein Arretierungsmittel vorgesehen ist, das ein Bewegen des zweite Adapterkerns (13) in der Ausnehmung (19) zumindest in einer Richtung verhindert, wobei das Arretierungsmittel durch eine Nase und eine korrespondierende Vertiefung oder durch eine Arretierungsschraube gebildet ist.

5. Konusadapter nach einem der Ansprüche 2 bis 4, **dadurch gekennzeichnet, dass** in dem ersten Adapterkern (12) eine Öffnung (24) vorgesehen ist, die vorzugsweise koaxial zu der Ausnehmung (19) ausgebildet ist, wobei die Öffnung (24) derart angeordnet und ausgebildet ist, dass ein Fixiermittel zum Fixieren der Konusadapters auf dem Anschlusskonus (4) durch die Öffnung (24) führbar ist, und wobei das Fixiermittel vorzugsweise durch eine Fixierschraube (14) gebildet ist.

6. Konusadapter nach einem der Ansprüche 2 bis 5, **dadurch gekennzeichnet, dass** in dem zweiten Adapterkern (13) und/oder dem ersten Adapterkern (12) eine Gewindebuchse ausgebildet ist, in die eine Schraube zum Fixieren des Anschlussmittels auf dem Ausgangskonus einschraubbar ist, wobei vorzugsweise ein erster Teil der Gewindebuchse (21) in dem ersten Adapterkern (12) und ein zweiter Teil der Gewindebuchse (22) in dem zweiten Adapterkern (13) gebildet ist.

7. Konusadapter nach einem der Ansprüche 1 bis 6, **dadurch gekennzeichnet, dass** in dem Konusadapter (5) ein Sensor (11) integriert ist, mit dem ein zwischen Eingangskonus (7) und Ausgangskonus (8) fließender Strom messbar ist, wobei der Sensor vorzugsweise ringförmig ausgebildet und vorzugsweise um den Eingangskonus angeordnet ist, und/oder
dass in dem Konusadapter (5) ein Sensor integriert ist, mit dem eine an dem Eingangskonus (7) anliegende Spannung messbar ist, wobei der Sensor zum Messen einer Spannung vorzugsweise kapazitiv oder über Widerstände realisiert ist.

8. Konusadapter nach einem der Ansprüche 1 bis 7, **dadurch gekennzeichnet, dass** der Abzweig mit einem Außenkonus (16) oder einem Innenkonus (17) verbunden ist.

9. Konusadapter nach einem der Ansprüche 1 bis 8, **dadurch gekennzeichnet, dass** der Abzweig mit einem Koppler verbunden ist, wobei der Koppler durch eine Koppelkapazität (9) und gegebenenfalls ein Koppelnetzwerk (10) gebildet ist und vorzugsweise zum Anschluss eines PLC-Endgeräts - Power Line Communication Endgerät - oder eines BPL-Endgeräts - Breitband Power Line Endgerät - ausgebildet ist.

10. Konusadapter nach Anspruch 9, **gekennzeichnet durch** ein Gehäuse aus einem isolierenden Material, wobei in dem Gehäuse ein Abschnitt (16) definiert, der vorzugsweise zylindrisch ausgebildet ist, wobei der Abschnitt (16) zur Aufnahme der Koppelkapazität (9) und/oder einer Platine ausgebildet ist und wobei auf der Platine vorzugsweise das Koppelnetzwerk (10) und/oder Elektronik zum Verarbeiten von Mess- und/oder Kommunikationssignalen aufgebaut ist.

11. Verfahren zum Zwischenschalten eines Konusadapters nach einem der Ansprüche 1 bis 10 zwischen einen Anschlusskonus einer elektrischen Anlage, insbesondere einer Mittelspannungsanlage, und einem Anschlussmittel, wobei der Konusadapter einen Eingangskonus (7) und einen Ausgangskonus (8) aufweist, umfassend die Schritte:
Abziehen des Anschlussmittels (3, 3', 3") von dem Anschlusskonus (4),
Zurückbiegen eines mit dem Anschlussmittel (3, 3', 3") verbundenen Kabels (2, 2', 2"),
Aufstecken des Eingangskonus (7) des Konusadapters (5) auf den Anschlusskonus (4) und
Aufstecken des Anschlussmittels (3, 3', 3") auf den Ausgangskonus (8) des Konusadapters (5),
womit der Konusadapter ohne Nachziehen des Kabels (2, 2', 2") in die elektrische Anlage installierbar ist.

12. Verfahren nach Anspruch 11, wobei bei Vorhandensein eines Fixiermittels zum Fixieren des Anschlussmittels (3, 3', 3") auf dem Anschlusskonus (4) vor dem Schritt des Abziehens des Anschlussmittels (3, 3', 3") der Schritte des Lösens des Fixiermittels ausgeführt wird, wobei nach dem Aufstecken des Eingangskonus (7) auf den Anschlusskonus (4) der Konusadapter (5) auf dem Anschlusskonus (4) mittels eines weiteren Fixiermittels (14) fixiert wird und wobei nach dem Aufstecken des Anschlussmittels (3, 3', 3") auf den Ausgangskonus (8) das Anschlussmittel (3, 3', 3") auf dem Ausgangskonus (4) mittels des Fixiermittels fixiert wird.

13. System bestehend aus einem Anschlusskonus (4), einem Konusadapter (5) nach einem der Ansprüche 1 bis 10 und einem Anschlussmittel (3, 3', 3"), das mit einem Kabel (2, 2', 2") verbunden und zum Aufstecken auf den Anschlusskonus (4) ausgebildet ist, wobei der Konusadapter (5) einen Eingangskonus (7), einen Ausgangskonus (8) und einen Abzweig aufweist, die untereinander elektrisch leitend verbunden sind, wobei der Eingangskonus (7) auf den Anschlusskonus (4) aufgesteckt ist, wobei das Anschlussmittel (3) auf den Ausgangskonus (8) aufgesteckt ist, wobei sowohl bei dem Eingangskonus (7) als auch bei dem Ausgangskonus (8) jeweils eine Achse definiert ist und wobei die Achse des Eingangskonus (7) und die Achse des Ausgangskonus (8) einen Winkel α einschließen, wobei der Winkel α zwischen 10° und 35° beträgt.

14. System nach Anspruch 13, **gekennzeichnet durch** ein weiteres Anschlussmittel, wobei das weitere Anschlussmittel mit dem Abzweig des Konusadapters (5) verbunden ist, wobei an einer Verbindungsstelle zwischen dem weiteren Anschlussmittel und Abzweig ein Außenkonus (16) oder ein Innenkonus (17) ausgebildet ist und wobei das weitere Anschlussmittel vorzugsweise eine elektrische Verbindung zu einem elektrischen Bauteil oder einem elektrischen System herstellt.

15. System nach Anspruch 13 oder 14, **gekennzeichnet durch** einen Koppler, der elektrisch mit dem Abzweig des Konusadapters (5) verbunden und vorzugsweise innerhalb eines Gehäuses des Konusadapters (5) angeordnet ist, wobei der Koppler vorzugsweise aus einer Koppelkapazität (9) und gegebenenfalls einem Koppelnetzwerk (10) besteht und dazu ausgebildet ist, PLC-Signale - Power Line Communication Signale - und/oder BPL-Signale - Breitband Power Line Signale - ein- und/ oder auszukoppeln.

16. Elektrische Anlage, insbesondere eine Mittelspannungsanlage, die mindestens ein System nach einem der Ansprüche 13 bis 15 aufweist, wobei der Anschlusskonus (4) des mindestens einen Systems mit einer elektrischen Funktionseinheit der elektrischen Anlage verbunden ist.

## Claims

1. Cone adapter for interposing between a connection cone (4) of an electrical installation, in particular a medium-voltage installation, and a connection means (3, 3', 3'') which is constructed to be placed on the connection cone (4), wherein the cone adapter (5) has an input cone (7) and an output cone (8), wherein the input cone (7) and the output cone (8) are connected to each other in an electrically conductive manner, wherein the input cone (7) is constructed to be placed on the connection cone (4) and wherein the output cone (8) is constructed in such a manner that the connection means (3, 3', 3'') can be placed on the output cone (8),
**characterised in that** the cone adapter additionally has a branch, wherein the input cone (7), the output cone (8) and the branch are connected to each other in an electrically conductive manner by means of an adapter core, **in that** both for the input cone (7) and for the output cone (8) an axis is defined in each case and **in that** the axis of the input cone (7) and the axis of the output cone (8) form an angle (α), wherein the angle α is between 10° and 35°.

2. Cone adapter according to claim 1, **characterised in that** the adapter core is constructed in two parts and comprises a first adapter core (12) and a second adapter core (13), wherein the second adapter core (13) is preferably arranged at least partially in a recess (19) in the first adapter core (12), wherein the recess (19) is preferably constructed in a cylindrical manner.

3. Cone adapter according to claim 2, **characterised in that** at least a portion of the recess (19) in the first adapter core (12) has an inner thread, **in that** at least a portion of the second adapter core (13) has an outer thread (23), wherein the inner thread and the outer thread (23) are adapted to each other in such a manner that the second adapter core (13) can be screwed into the recess (19) of the first adapter core (12).

4. Cone adapter according to claim 2 or claim 3, **characterised in that** there is provided a locking means which prevents a movement of the second adapter core (13) in the recess (19) at least in one direction, wherein the locking means is formed by means of a projection and a corresponding recess or by means of a locking screw.

5. Cone adapter according to any one of claims 2 to 4, **characterised in that** there is provided in the first adapter core (12) an opening (24) which is preferably formed coaxially relative to the recess (19), wherein the opening (24) is arranged and constructed in such a manner that a fixing means for fixing the cone adapter to the connection cone (4) can be guided through the opening (24), and wherein the fixing means is preferably formed by a fixing screw (14).

6. Cone adapter according to any one of claims 2 to 5, **characterised in that** in the second adapter core (13) and/or the first adapter core (12) there is formed a threaded bush into which a screw for fixing the connection means to the output cone can be screwed, wherein preferably a first portion of the threaded bush (21) is formed in the first adapter core (12) and a second portion of the threaded bush (22) is formed in the second adapter core (13).

7. Cone adapter according to any one of claims 1 to 6, **characterised in that** there is integrated in the cone adapter (5) a sensor (11), by means of which a current flowing between the input cone (7) and output cone (8) can be measured, wherein the sensor is preferably constructed in an annular manner and is preferably arranged around the input cone, and/or
**in that** in the cone adapter (5) there is integrated a sensor by means of which a voltage applied at the input cone (7) can be measured, wherein the sensor is produced to measure a voltage preferably in a capacitive manner or by means of resistances.

8. Cone adapter according to any one of claims 1 to 7, **characterised in that** the branch is connected to an outer cone (16) or an inner cone (17).

9. Cone adapter according to any one of claims 1 to 8, **characterised in that** the branch is connected to a coupler, wherein the coupler is formed by means of a coupling capacitor (9) and where applicable a coupling network (10) and is preferably constructed to connect a PLC terminal - Power Line Communication terminal - or a BPL terminal - Broadband Power Line terminal.

10. Cone adapter according to claim 9, **characterised by** a housing of an insulating material, wherein there is defined in the housing a portion (16) which is preferably constructed in a cylindrical manner, wherein the portion (16) is constructed to receive the coupling capacitor (9) and/or a printed circuit board, and wherein the coupling network (10) and/or electronic system for processing measurement and/or communication signals is preferably constructed on the printed circuit board.

11. Method for interposing a cone adapter according to any one of claims 1 to 10 between a connection cone of an electrical installation, in particular a medium-voltage installation, and a connection means, wherein the cone adapter has an input cone (7) and an output cone (8), comprising the steps of:
removing the connection means (3, 3', 3'') from the connection cone (4),
bending back a cable (2, 2', 2'') which is connected to the connection means (3, 3', 3''),
placing the input cone (7) of the cone adapter (5) on the connection cone (4), and
placing the connection means (3, 3', 3'') on the output cone (8) of the cone adapter (5),
whereby the cone adapter can be installed without pulling the cable (2, 2', 2'') into the electrical installation.

12. Method according to claim 11, wherein, in the presence of a fixing means for fixing the connection means (3, 3', 3'') to the connection cone (4) prior to the step for removing the connection means (3, 3', 3''), the step of releasing the fixing means is carried out, wherein, after the input cone (7) has been placed on the connection cone (4), the cone adapter (5) is fixed to the connection cone (4) by means of an additional fixing means (14), and wherein after the connection means (3, 3', 3'') has been fitted to the output cone (8), the connection means (3, 3', 3'') is fixed to the output cone (4) by the fixing means.

13. System comprising a connection cone (4), a cone adapter (5) according to any one of claims 1 to 10 and a connection means (3, 3', 3'') which is connected to a cable (2, 2', 2'') and which is constructed to be placed on the connection cone (4), wherein the cone adapter (5) has an input cone (7), an output cone (8) and a branch, which are connected to each other in an electrically conductive manner, wherein the input cone (7) is placed on the connection cone (4), wherein the connection means (3) is placed on the output cone (8), wherein both for the input cone (7) and for the output cone (8) an axis is defined in each case and wherein the axis of the input cone (7) and the axis of the output cone (8) form an angle α, wherein the angle α is between 10° and 35°.

14. System according to claim 13, **characterised by** an additional connection means, wherein the additional connection means is connected to the branch of the cone adapter (5), wherein at a connection location between the additional connection means and branch an outer cone (16) or an inner cone (17) is formed and wherein the additional connection means preferably produces an electrical connection to an electrical component or an electrical system.

15. System according to claim 13 or claim 14, **characterised by** a coupler which is electrically connected to the branch of the cone adapter (5) and which is preferably arranged inside a housing of the cone adapter (5), wherein the coupler preferably comprises a coupling capacitor (9) and where applicable a coupling network (10) and is constructed to couple and/or uncouple PLC signals - Power Line Communication Signals - and/or BPL signals - Broadband Power Line Signals.

16. Electrical installation, in particular a medium-voltage installation, which has at least one system according to any one of claims 13 to 15, wherein the connection cone (4) of the at least one system is connected to an electrical functional unit of the electrical installation.

## Revendications

1. Adaptateur conique pour l'interconnexion entre un cône de raccordement (4) d'une installation électrique, plus particulièrement d'une installation à moyenne tension, et un moyen de raccordement (3, 3', 3") qui est conçu pour être emboîté sur le cône de raccordement (4), l'adaptateur conique (5) comprenant un cône d'entrée (7) et un cône de sortie (8), le cône d'entrée (7) et le cône de sortie (8) étant reliés entre eux de manière électro-conductrice, le cône d'entrée (7) étant conçu pour être emboîté sur le cône de raccordement (4) et le cône de sortie (8) étant conçu de façon à ce que le moyen de raccordement (3, 3', 3") puisse être emboîté sur le cône de sortie (8),
**caractérisé en ce que** l'adaptateur conique comprend en outre un embranchement, le cône d'entrée (7), le cône de sortie (8) et l'embranchement étant reliés entre eux de manière électro-conductrice au moyen d'un noyau adaptateur, **en ce que**, aussi bien pour le cône d'entrée (7) que pour le cône de sortie (8), est défini un axe et **en ce que** l'axe du cône d'entrée (7) et l'axe du cône de sortie (8) forment un angle a, l'angle a étant entre 10° et 35°.

2. Adaptateur conique selon la revendication 1, **caractérisé en ce que** le noyau adaptateur est constitué de deux parties et comprend un premier noyau adaptateur (12) et un deuxième noyau adaptateur (13), le deuxième noyau adaptateur (13) étant de préférence disposé au moins partiellement dans un évidement (19) du premier noyau adaptateur (12), l'évidement (19) présentant de préférence une forme cylindrique.

3. Adaptateur conique selon la revendication 2, **caractérisé en ce qu'**au moins une partie de l'évidement (19) dans le premier noyau adaptateur (12) comprend un filetage interne, **en ce qu'**au moins une partie du deuxième noyau adaptateur (13) comprend un filetage externe (23), le filetage interne et le filetage externe (23) étant adaptés l'un à l'autre de façon à ce que le deuxième noyau adaptateur (13) puisse être vissé dans l'évidement (19) du premier noyau adaptateur (12).

4. Adaptateur conique selon la revendication 2 ou 3, **caractérisé en ce qu'**un moyen d'arrêt est prévu, qui empêche un mouvement du deuxième noyau adaptateur (13) dans l'évidement (19) au moins dans une direction, le moyen d'arrêt étant constitué d'un embout et d'une cavité correspondante ou d'une vis d'arrêt.

5. Adaptateur conique selon l'une des revendications 2 à 4, **caractérisé en ce que**, dans le premier noyau adaptateur (12), est prévu une ouverture (24) qui est réalisée de préférence de manière coaxiale par rapport à l'évidement (19), l'ouverture (24) étant disposée et réalisée de façon à ce qu'un moyen de fixation puisse être guidé par l'ouverture (24) pour la fixation de l'adaptateur conique sur le cône de raccordement (4) et le moyen de fixation étant constitué de préférence d'une vis de fixation (14).

6. Adaptateur conique selon l'une des revendications 2 à 5, **caractérisé en ce que**, dans le deuxième noyau adaptateur (13) et/ou dans le premier noyau adaptateur (12), est réalisée une douille filetée dans laquelle une vis peut être vissée pour la fixation du moyen de raccordement au cône de raccordement, de préférence une première partie de la douille filetée (21) étant réalisée dans le premier noyau adaptateur (12) et une deuxième partie de la douille filetée (22) étant réalisée dans le deuxième noyau adaptateur (13).

7. Adaptateur conique selon l'une des revendications 1 à 6, **caractérisé en ce que**, dans l'adaptateur conique (5), est intégré un capteur (11) qui permet de mesurer un courant s'écoulant entre le cône d'entrée (7) et le cône de sortie (8), le capteur présentant de préférence une forme annulaire et étant disposé de préférence autour du cône d'entrée et/ou
dans l'adaptateur conique (5), est intégré un capteur qui permet de mesurer une tension appliquée au cône d'entrée (7), le capteur étant conçu pour la mesure d'une tension de préférence de manière capacitive ou par l'intermédiaire de résistances.

8. Adaptateur conique selon l'une des revendications 1 à 7, **caractérisé en ce que** l'embranchement est relié avec un cône externe (16) ou un cône interne (17).

9. Adaptateur conique selon l'une des revendications 1 à 8, **caractérisé en ce que** l'embranchement est relié avec un un coupleur, le coupleur étant constitué d'un condensateur de couplage (9) et, le cas échéant, d'un réseau de couplage (10) et est conçu de préférence pour le raccordement d'un terminal PLC - terminal Power Line Communication - ou d'un terminal BPL - terminal Power Line à large bande.

10. Adaptateur conique selon la revendication 9, **caractérisé par** un boîtier constitué d'un matériau isolant, une portion (16) étant définie dans le boîtier, qui présente de préférence une forme cylindrique, la portion (16) étant conçue pour le logement du condensateur de couplage (9) et/ou d'une platine et le réseau de couplage (10) et/ou une électronique de traitement de signaux de mesure et/ou de communication étant de préférence montés sur la platine.

11. Procédé pour l'interconnexion d'un adaptateur conique selon l'une des revendications 1 à 10 entre un cône de raccordement d'une installation électrique, plus particulièrement d'une installation à moyenne tension, et un moyen de raccordement, l'adaptateur conique comprenant un cône d'entrée (7) et un cône de sortie (8), comprenant les étapes suivantes :
retrait du moyen de raccordement (3, 3', 3") du cône de raccordement (4),
repliage d'un câble (2, 2', 2") relié avec le moyen de raccordement (3, 3', 3"),
emboîtement du cône d'entrée (7) de l'adaptateur conique (5) sur le cône de raccordement (4) et
emboîtement du moyen de raccordement (3, 3', 3") sur le cône de sortie (8) de l'adaptateur conique (5),
l'adaptateur conique pouvant ainsi être installé sans resserrer le câble (2, 2', 2") dans l'installation électrique.

12. Procédé selon la revendication 11, moyennant quoi, lors de la présence d'un moyen de fixation pour la fixation du moyen de raccordement (3, 3', 3") sur le cône de raccordement (4), avant l'étape de retrait du moyen de raccordement (3, 3', 3"), l'étape de détachement du moyen de fixation est exécutée, moyennant quoi, après l'emboîtement du cône d'entrée (7) sur le cône de raccordement (4), l'adaptateur conique (5) est fixé sur le cône de raccordement (4) au moyen d'un autre moyen de fixation (14) et, après l'emboîtement du moyen de raccordement (3, 3', 3") sur le cône de sortie (8), le moyen de raccordement (3, 3', 3") est fixé sur le cône de sortie (4) à l'aide du moyen de fixation.

13. Système constitué d'un cône de raccordement (4), d'un adaptateur conique (5) selon l'une des revendications 1 à 10 et d'un moyen de raccordement (3, 3', 3"), qui est relié avec un câble (2, 2', 2") et qui est conçu pour être emboîté sur le cône de raccordement (4), l'adaptateur conique (5) comprenant un cône d'entrée (7), un cône de sortie (8) et un embranchement, qui sont reliés entre eux de manière électro-conductrice, le cône d'entrée (7) étant emboîté sur le cône de raccordement (4), le moyen de raccordement (3) étant emboîté sur le cône de sortie (8), un axe étant défini aussi bien pour le cône d'entrée (7) que pour le cône de sortie (8) et l'axe du cône d'entrée (7) et l'axe du cône de sortie (8) formant un angle a, l'angle a étant entre 10° et 35°.

14. Système selon la revendication 13, **caractérisé par** un autre moyen de raccordement, l'autre moyen de raccordement étant relié avec l'embranchement de l'adaptateur conique (5), un cône externe (16) ou un cône interne (17) étant réalisés au niveau d'un point de liaison entre l'autre moyen de raccordement et l'embranchement et l'autre moyen de raccordement établissant de préférence une liaison électrique avec un composant électrique ou un système électrique.

15. Système selon la revendication 13 ou 14, **caractérisé par** un coupleur, qui est relié électriquement avec l'embranchement de l'adaptateur conique (5) et est disposé de préférence à l'intérieur d'un boîtier de l'adaptateur conique (5), le coupleur étant constitué de préférence d'un condensateur de couplage (9) et, le cas échéant, d'un condensateur de couplage (10) et étant conçu pour coupler ou découpler des signaux PLC - signaux Power Line Communication - et/ou des signaux BPL - signaux Power Line à large bande.

16. Installation électrique, plus particulièrement installation à moyen tension qui comprend au moins un système selon l'une des revendications 13 à 15, le cône de raccordement (4) de l'au moins un système étant relié avec une unité fonctionnelle électrique de l'installation électrique.
